(19) Europäisches Patentamt
European Patent Office
Office européen des brevets

(11) **EP 2 665 682 B1**

(12) **EUROPÄISCHE PATENTSCHRIFT**

(45) Veröffentlichungstag und Bekanntmachung des Hinweises auf die Patenterteilung:
**13.05.2015 Patentblatt 2015/20**

(21) Anmeldenummer: **12700965.2**

(22) Anmeldetag: **16.01.2012**

(51) Int Cl.:
*C01B 33/107* (2006.01)   *B01J 12/00* (2006.01)
*C01B 33/04* (2006.01)

(86) Internationale Anmeldenummer:
**PCT/EP2012/050546**

(87) Internationale Veröffentlichungsnummer:
**WO 2012/098069 (26.07.2012 Gazette 2012/30)**

(54) **VERFAHREN UND VORRICHTUNG ZUR KONVERTIERUNG VON SILICIUMTETRACHLORID IN TRICHLORSILAN**

PROCESS AND APPARATUS FOR CONVERSION OF SILICON TETRACHLORIDE TO TRICHLOROSILANE

PROCÉDÉ ET DISPOSITIF POUR LA CONVERSION DE TÉTRACHLORURE DE SILICIUM EN TRICHLOROSILANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2011 DE 102011002749**

(43) Veröffentlichungstag der Anmeldung:
**27.11.2013 Patentblatt 2013/48**

(73) Patentinhaber: **Wacker Chemie AG**
**81737 München (DE)**

(72) Erfinder:
• **RING, Robert**
**84533 Haiming (DE)**
• **BANOS, Noemi**
**904449 Nürnberg (DE)**
• **PÄTZOLD, Uwe**
**84489 Burghausen (DE)**

(74) Vertreter: **Killinger, Andreas et al**
**Wacker Chemie AG**
**Intellectual Property**
**Hanns-Seidel-Platz 4**
**81737 München (DE)**

(56) Entgegenhaltungen:
EP-A1- 1 454 670      WO-A1-2011/085902
WO-A2-2011/085896      DE-A1-102005 005 044

**Beschreibung**

Gegenstand der Erfindung ist ein Verfahren sowie eine Vorrichtung zur Konvertierung von Siliciumtetrachlorid in Trichlorsilan.

Trichlorsilan wird zur Herstellung von polykristallinem Silicium verwendet.

Die Herstellung von Trichlorsilan erfolgt üblicherweise in einem Wirbelbettverfahren aus metallurgischem Silicium und Chlorwasserstoff. Um hochreines Trichlorsilan zu erzeugen, erfolgt anschließend eine Destillation. Dabei fällt als Nebenprodukt auch Siliciumtetrachlorid an.

Die größte Menge an Siliciumtetrachlorid fällt bei der Abscheidung von polykristallinem Silicium an. Polykristallines Silicium wird beispielweise mittels des Siemens-Prozesses erzeugt. Dabei wird Silicium in einem Reaktor an erhitzten Dünnstäben abgeschieden. Als Prozessgas wird als Silicium enthaltende Komponente ein Halogensilan wie Trichlorsilan in Anwesenheit von Wasserstoff verwendet. Bei der Umsetzung von Trichlorsilan (Disproportionierung) in abgeschiedenes Silicium entstehen große Mengen an Siliciumtetrachlorid.

Aus Siliciumtetrachlorid kann beispielsweise durch Reaktion mit Wasserstoff und Sauerstoff bei hohen Temperaturen in Brennkammern hoch disperse Kieselsäure produziert werden.

Die wirtschaftlich interessanteste Verwendung von Siliciumtetrachlorid ist jedoch die Konvertierung zu Trichlorsilan. Diese erfolgt durch Reaktion von Siliciumtetrachlorid mit Wasserstoff in Trichlorsilan und Chlorwasserstoff. Dadurch ist es möglich, aus dem bei der Abscheidung entstehenden Nebenprodukt Siliciumtetrachlorid Trichlorsilan zu erzeugen und jenes Trichlorsilan wieder dem Abscheideprozess zuzuführen, um elementares Silicium zu erzeugen.

Die Konvertierung von Siliciumtetrachlorid mit Wasserstoff zu Trichlorsilan findet üblicherweise in einem Reaktor bei hohen Temperaturen statt, bei wenigstens 600°C, idealer weise bei wenigstens 850°C. (Hochtemperaturkonvertierung)

Aus Gründen der Energieeinsparung werden die Edukte der Reaktion (Siliciumtetrachlorid und Wasserstoff) üblicherweise mit Hilfe der heißen Abgase des Reaktors (Produkte und Reste der Edukte, also im wesentlichen Trichlorsilan, Chlorwasserstoff, Siliciumtetrachlorid und Wasserstoff) erwärmt.

In der Patentschrift DE 30 24 320 C2 wird eine entsprechende Vorrichtung zur Konvertierung von Siliciumtetrachlorid zu Trichlorsilan unter Verwendung einer Wärmeaustauschereinheit beansprucht. Die Wärmetauschereinheit kann beispielsweise aus einem Satz elektrisch unbeheizter Graphitrohre, die als Gasableitung dienen, welche außen im Gegenstromprinzip von Frischgas umströmt werden, bestehen.

Reaktoren für die Hydrierung von Siliciumtetrachlorid mit Wasserstoff müssen hohen Temperaturen und der korrosiven Natur von Materialien wie Chlorsilanen und Chlorwasserstoffgas, das während des Hydrierungsverfahrens gebildet wird, widerstehen können. Daher werden typischerweise Materialien auf Kohlenstoffbasis, einschließlich Kohlenstoff, Graphit, Kohlenstofffaser-Verbundmaterialien und dergleichen, innerhalb des Reaktors verwendet.

DE 195 02 550 A1 offenbart ein Verfahren zur Hydrierung von Siliciumtetrachlorid, wobei das Verfahren umfasst, dass man Wasserstoffgas und Siliciumtetrachlorid bei einer Temperatur von mehr als 600°C in einem Reaktor in Kontakt bringt, der einen unter Druck zu setzenden Mantel umfasst, in dem ein Reaktionsbehälter angeordnet ist, der eine im wesentlichen geschlossene innere Kammer bildet, um Wasserstoffgas mit Siliciumtetrachlorid in Kontakt zu bringen, dadurch gekennzeichnet, dass eine äußere Kammer zwischen dem unter Druck zu setzenden Mantel und dem Reaktionsbehälter angeordnet ist, wobei in der äußeren Kammer und benachbart zu dem Mantel eine Kohlenstoff- oder Graphitisolierschicht angeordnet ist und zwischen der Isolierschicht und dem Reaktionsbehälter ein oder mehrere Heizelemente angeordnet sind, wobei der äußeren Kammer ein Gas oder eine gasförmige Mischung mit einem molaren Verhältnis von Chlor zu Silicium von mehr als 3,5 zugeführt wird.

Das in der äußeren Kammer zugeführte Gas kann Siliciumtetrachlorid oder eine Mischung von Siliciumtetrachlorid mit Trichlorsilan, Dichlorsilan oder Chlorsilan sein. Die der äußeren Kammer zugeführte gasförmige Mischung kann auch Chlor, Chlorwasserstoff oder eine Mischung davon und ein oder mehrere Silane ausgewählt aus Siliciumtetrachlorid, Trichlorsilan, Dichlorsilan und Chlorsilan umfassen.

Bei hohen Temperaturen reagiert Graphit mit Wasserstoff zu Methan (= Methanisierung). Dies führt zu strukturellen Defekten des Reaktors und schließlich zu Reaktorausfällen und einer Reduktion der Standzeit. Da defekte Teile ausgetauscht und neue Teile montiert werden müssen, ist dies auch mit einem erheblichen finanziellen Aufwand verbunden.

Die Methanisierung tritt insbesondere an den Heizern auf, die direkt mit Wasserstoff und Siliciumtetrachlorid in Berührung kommen. Daneben können auch die Gegenstromwärmetauscher insbesondere im Bereich höherer Temperaturen, insbesondere im Bereich der Abgase, durch die Reaktion von Wasserstoff und Graphit zu Methan geschädigt werden. Besonders aus Graphit gefertigte Heizelemente zeigen die größte Korrosionsanfälligkeit, da hier Wasserstoff (vermischt mit Siliciumtetrachlorid) auf sehr heiße Oberflächen trifft. Schäden in den Heizern führen mit hoher Wahrscheinlichkeit zu einem Ausfall des Konvertierreaktors, da die Heizer als Widerstandsheizung ausgeführt sind.

Da Graphit aufgrund seiner Porosität für Wasserstoff und Siliciumtetrachlorid durchlässig ist, können Wasserstoff und Siliciumtetrachlorid im Wärmetauscher von der Eduktseite zur Produktseite diffundieren. Dies reduziert die Selektivität des Gesamtprozesses, da nicht alle Edukte vollständig durch den Konverter geführt werden.

Der zur Produktseite diffundierende Eduktstrom erreicht die Reaktionszone nicht, was dazu führt, dass keine Umsetzung von Siliciumtetrachlorid zu Trichlorsilan stattfindet. Zusätzlich wird der aus der Reaktionszone kommende Produktstrom verdünnt, was nachteilig ist.

Falls gemäß DE 195 02 550 A1 vorgegangen wird, stehen die Heizelemente nicht in Kontakt mit heißem Wasserstoff. Es kann daher in diesem Bereich zu keiner Korrosion kommen. Schädliche Wirkungen von Wasserstoffgas außerhalb der Reaktionszone können vermindert werden.

Allerdings können die Röhren, die die innere Zone bilden sowie die äußere Zone definieren, durch den einfließenden Wasserstoff korrodiert werden, was auf lange Sicht zu Ausfällen des Reaktors führt.

Außerdem hat sich gezeigt, dass es in Gegenwart von Dichlorsilan zu einer Abscheidung von Silicium an den beiden Röhren kommt. Dies führt zu einer Verschlechterung des Wärmeübergangs. Um das zu kompensieren, müsste die Heizleistung weiter erhöht werden, was sich negativ auf die Energiebilanz auswirken würde.

In EP 2 008 969 A1 wird ein Reaktor zur Konvertierung von Siliciumtetrachlorid beschrieben, bei dem Schutzgas dazu verwendet wird, eventuell auftretende Leckagen von Prozessgasen zu verhindern. Dabei wird Argon in einen Außenbehälter geführt, während sich im Reaktionsbehälter kein Argon befindet. Dadurch werden die Heizer vor Wasserstoff und anderen Prozessgasen geschützt.

Auch in EP 2 000 434 A2 wird eine Vorrichtung zur Konvertierung von Siliciumtetrachlorid vorgeschlagen, bei der die Heizer getrennt vom Reaktionsraum angeordnet sind. Der Raum zwischen Reaktionszone und äußerem Behälter wird mit Argon unter erhöhtem Druck versorgt, um Leckagen nach außen zu verhindern. Auch hier stehen die Heizer zwar nicht in direktem Kontakt mit heißem Wasserstoff. Eine Korrosion der Heizer wird somit vermieden. Allerdings sind die Wärmetauscher dem Wasserstoff schutzlos ausgesetzt.

Der Nachteil dieser Methoden besteht darin, dass durch die höhere Entfernung der Heizer zum Produktstrom eine wesentlich höhere Temperatur der Heizer benötigt wird. Diese höhere Temperatur hat Schäden an der elektrischen Durchführung zur Folge. Außerdem bedingt sie einen größeren Aufwand zur Isolierung des Heizraums nach außen zur Druck tragenden Hülle. Des Weiteren vergrößert diese notwendige zusätzlich Isolierung den Durchmesser der Anlage. Der Heizraum muss außerdem mit einer aufwändigen Druckregulierung versehen werden, die dafür sorgt, dass der Druck im Heizraum immer etwas größer ist als im Produktraum, damit vor allem der Wasserstoff nicht in den Heizraum eindringen kann.

Der Druck im Heizraum darf aber auch nicht zu groß sein, weil sonst die Produktkammer, die aufgrund der Heizer extremen Temperaturen ausgesetzt ist, zusätzlich noch mit Überdruck belastet wird und daher beschädigt werden kann. Außerdem gehen durch die fehlenden Heizer im Reaktionsraum Wärmetauscherflächen verloren, die zusätzlich eingebracht werden müssen, was den Reaktor noch größer werden lässt.

Ist die den Heizraum begrenzende Hülle leicht beschädigt, z.B. durch chemischen Angriff, strömt das Gas im Heizraum bedingt durch den Überdruck in den Produktraum. Das bedeutet einerseits einen entsprechenden Gasverlust für das Gas im Heizraum. Andererseits werden die Produktgase durch das einströmende Gas verunreinigt, was sich nachteilig insbesondere für die nachfolgenden Prozesse auswirken kann.

Prinzipiell ist es auch möglich, die Leistung nicht über Strahlung sondern über Induktion in den Produktraum einzutragen. Die Nachteile dieser Variante sind ebenfalls die aufwändige Druckregelung und der größere erforderliche Durchmesser der Anlage. Außerdem müsste eine Isolation zwischen Produktraum und Heizraum eingebracht werden, um die Induktionsspule im Heizraum vor unzulässig hohen Temperaturen zu schützen. Zusätzlich müsste die Induktionsspule gekühlt werden, was zu Wärmeverlusten führt und damit den Wirkungsgrad des Reaktors reduziert.

In der Patentschrift DE 10 2006 050 329 B3 wird ein Hochdruckverfahren zur Konvertierung von Siliciumtetrachlorid zu Trichlorsilan beschrieben. Die Umsetzung muss bei einem überkritischen Druck der Eduktgase erfolgen. Vorzugsweise wird der Systemdruck des Produktstroms im unterkritischen Bereich gehalten. Dies wird durch ein Entspannen nach der Reaktionszone erreicht. Auch hier zeigt sich jedoch, dass die Heizelemente und Wärmetauscher durch Wasserstoff korrodiert werden.

Im Stand der Technik wurden Anstrengungen unternommen, die verwendeten Graphitteile mit geeigneten Materialien zu beschichten, um zu erreichen, dass Wasserstoff nicht mehr oder nur vermindert mit der Oberfläche der Teile reagieren kann.

In DE 10 2005 046 703 A1 wird beispielsweise vorgeschlagen, die Oberfläche der Reaktionskammer und die Oberfläche des Heizelements vor der Hydrierung des Chlorsilans in-situ mit Siliciumkarbid zu beschichten und so eine Methanisierung dieser Bauteile zu verringern. Dieser Schritt der Beschichtung mit Siliciumkarbid findet bei einer Temperatur von mindestens 1000°C statt.

Dennoch ist auch bei beschichteten Graphitteilen stets noch eine Methanisierung und eine damit einhergehende Korrosion zu erwarten.

Des Weiteren ist es auch notwendig, die Wärmetauscher-insbesondere die heißesten Teile- zu beschichten, was einen nicht unerheblichen finanziellen Aufwand bedeutet zumal es nach wie vor Verbrauchsgüter sind. Auch eine Fertigung der Wärmetauscher komplett aus SiC wäre denkbar, was aber einerseits ebenfalls einen enormen finanziellen Aufwand bedeutet und andererseits eine Fertigung von größeren Bauteilen aus SiC oder vergleichbaren Keramikwerkstoffen, wie sie eigentlich bei Produktionsanlagen erforderlich sind, nicht oder nur sehr schwierig möglich ist.

In DE 10 2005 005 044 A1 wird ein Verfahren zur Konvertierung von Siliciumtetrachlorid zu Trichlorsilan beschrieben, bei dem die Abkühlrate des Prozessgases im Wärmetauscher kontrolliert wird. Für die Wärmetauscher werden bevorzugt Materialien wie Siliciumkarbid, Siliciumnitrid, Quarzglas, Graphit oder mit Siliciumcarbid geschichteter Graphit verwendet.

Allerdings ist der konstruktive Aufwand vergleichsweise hoch und die Verwendung solcher Wärmetauscher somit relativ teuer.

In DE 11 2008 002 299 T5 wird vorgeschlagen, "schmutziges" Trichlorsilan enthaltend Dichlorsilan aus der Trichlorsilan-Roherzeugung zu reinigen und dann mit Siliciumtetrachlorid zu Trichlorsilan umzusetzen.

Wird Dichlorsilan bei der Konvertierung als zusätzliche Komponente der Edukte verwendet, wird jedoch eine zusätzliche kontinuierliche Beschichtung der Graphitteile wie der Wärmetauscher beobachtet. Diese mit der Zeit wachsende Beschichtung verändert den Wärmeübergang und hat daher negative Auswirkungen auf den Energiebedarf. Außerdem hat die Beschichtung negative Auswirkungen auf die strukturelle Integrität der Bauteile, insbesondere der Heizelemente.

Durch die Dichlorsilan-Abscheidereaktion, die bereits vor Eintritt des Dichlorsilan in den eigentlichen Reaktionsraum des Reaktors stattfindet, bleibt nur wenig Dichlorsilan übrig, um mit Siliciumtetrachlorid zu reagieren. Die Ausbeuteerhöhung an Trichlorsilan ist daher in der Realität deutlich geringer als zunächst erwartet.

Diese Problematik der Dichlorsilan-Abscheidung ist bei allen im Stand der Technik bekannten Verfahren und Reaktoren gegeben, wenn Dichlorsilan im Eduktstrom enthalten ist.

Aus dieser Problematik ergab sich die Aufgabenstellung der vorliegenden Erfindung, ein Verfahren und eine zur Durchführung des Verfahrens geeignete Vorrichtung bereitzustellen, die eine Methanisierung von Bauteilen verhindert und beim Einsatz von Dichlorsilan eine Abscheidung auf den Bauteilen unterbindet und gleichzeitig die Ausbeute an Trichlorsilan erhöht.

Die Aufgabe der Erfindung wird gelöst durch ein Verfahren zur Hydrierung von Chlorsilanen in einem Reaktor, wobei mindestens zwei Eduktgasströme getrennt voneinander in eine Reaktionszone eingebracht werden, wobei der erste Eduktgasstrom beinhaltend Siliciumtetrachlorid durch eine erste Wärmetauschereinheit geführt wird, in der er aufgeheizt wird, und dann über eine Heizeinheit geführt wird und dabei auf eine erste Temperatur aufgeheizt wird bevor der erste Eduktgasstrom die Reaktionszone erreicht, und wobei der zweite Eduktgasstrom beinhaltend Wasserstoff durch eine zweite Wärmetauschereinheit auf eine zweite Temperatur aufgeheizt wird, wobei die erste Temperatur größer ist als die zweite Temperatur, und dann in die Reaktionszone eingebracht wird, so dass die mittlere Gastemperatur in der Reaktionszone zwischen 850°C und 1300°C liegt und zu Produktgasen, umfassend Trichlorsilan und Chlorwasserstoff, reagieren, wobei die bei der Reaktion erzeugten Produktgase durch die besagten wenigstens zwei Wärmetauschereinheiten geführt werden und nach dem Gegenstromprinzip die Eduktgasströme der Reaktion vorheizen, wobei zunächst die erste Wärmetauschereinheit und danach die zweite Wärmetauschereinheit durchströmt wird.

Ebenso wird die Aufgabe gelöst durch einen Reaktor zur Hydrierung von Tetrachlorsilanen, umfassend zwei Gaseinlassvorrichtungen, durch die Eduktgase getrennt voneinander in den Reaktor eingebracht werden können, und wenigstens eine Gasauslassvorrichtung, durch die ein Produktgasstrom geführt werden kann, wenigstens zwei Wärmetauschereinheiten, die miteinander verbunden sind und die geeignet sind, Eduktgase durch die durch die Wärmetauschereinheiten geführten Produktgase getrennt voneinander aufzuheizen sowie eine Heizzone, die zwischen einer ersten Wärmetauschereinheit und einer Reaktionszone angeordnet ist und in der sich wenigstens ein Heizelement befindet.

Vorzugsweise wird die Reaktionszone mit einem zusätzlichen Gaseinlass versehen, der so angeordnet ist, dass einströmendes Gas nicht mit den Heizelementen in Berührung kommen kann. Vorzugsweise befindet sich dieser Gaseinlass im Zentrum der unteren Begrenzungsfläche der Reaktionskammer und ist mit mindestens einer Düse versehen.

In einer Ausführungsform umfasst der Reaktor einen Behälter, der eine Mantelfläche, einen unteren sowie einen dem unteren Boden gegenüberliegenden oberen Boden sowie mindestens eine Einlassvorrichtung für einen Eduktgasstrom und mindestens eine Auslassvorrichtung für einen Produktgasstrom enthält, mindestens ein kreisförmiges Heizelement oder mehrere kreisförmig angeordnete Heizelemente, wenigstens vier zylindrische Umlenkeinrichtungen für Gas, die konzentrisch im Behälter angeordnet sind, geeignet, am oberen oder am unteren Boden des Reaktors strömendes Gas umzulenken, wobei der Radius einer ersten zylindrischen Umlenkeinrichtung größer und der Radius der wenigstens drei weiteren Umlenkeinrichtungen kleiner ist als der Radius des kreisförmigen Heizelementes oder kleiner als der Radius des Kreises, auf dem die Heizelemente angeordnet sind, mindestens eine weitere Einlassvorrichtung für ein Eduktgas, die kreisförmig am unteren Boden des Behälters angebrachte Düsen umfasst, wobei der Radius des Kreises, auf dem die Düsen angeordnet sind, größer ist als der Radius einer der Umlenkeinrichtungen und kleiner als der Radius einer jener Umlenkeinrichtung benachbarten Umlenkeinrichtung

Durch das erfindungsgemäße Verfahren ist es möglich, Wasserstoff und Siliciumtetrachlorid beim Zustrom auf der Eduktseite voneinander zu trennen. Siliciumtetrachlorid kann zusätzlich ohne Beisein von Wasserstoff in einer Heizzone mit Hilfe eines elektrisch beheizten Heizelements auf eine Temperatur von über 1300°C erhitzt werden, ohne dass das Heizelement korrodiert wird. In der Heizzone finden keine chemischen Reaktionen statt, da nur für den Temperaturbereich inerte Gase zugeführt werden. Erst in der Reaktionszone vermischen sich beide Eduktströme, die gewünschte Mischtemperatur stellt sich ein und die Eduktströme reagieren zu den gewünschten Produkten, ohne dass eine zusätzliche Heizung erfolgt.

Besonders bevorzugt wird der Druck des Eduktgasstromes in der ersten Wärmetauschereinheit um 10 bis 1000 mbar höher eingestellt als der Druck des Produktgasstromes beim Durchströmen der ersten Wärmetauschereinheit.

Diese Druckdifferenz erzeugt einen Diffusionsvolumenstrom zwischen Edukt- und Produktseite des Wärmetauschers und kann mittels einer Drossel (16) eingestellt werden.

Bei einem herkömmlichen Reaktor werden die Edukte ($H_2$ und Siliciumtetrachlorid) zusammen in einen isolierten Behälter durch eine Öffnung zu den Wärmetauschern gebracht. Das heiße Abgas der Reaktion (Trichlorsilan, Siliciumtetrachlorid, HCl und $H_2$) erhitzt die Edukte im Kreuz-Gegenstromverfahren nahezu auf die gewünschte Endtemperatur. Im Reaktionsraum werden die Edukte zusätzlich an den Heizelementen entlang geführt, um so die notwendige Temperatur für die Reaktion zu erhalten.

Eine vereinfachte Reaktionsgleichung lautet:

$$SiCl_4 + H_2 \rightarrow SiHCl_3 + HCl$$

Über eine Öffnung strömt das so erhaltene Produktgas umfassend $SiHCl_3$ + HCl durch den oder die Wärmetauscher aus Graphit und verlässt über eine weitere Öffnung den Reaktor.

Dabei zeigen sich allerdings die zuvor beschriebenen Nachteile (Methanisierung, Korrosion, Aufwand, Kosten).

Um eine Trennung der Edukte (im Wesentlichen Wasstoff und Siliciumtetrachlorid) zu erreichen, werden erfindungsgemäß wenigstens zwei voneinander getrennte Wärmetauschereinheiten eingesetzt, wobei besonders bevorzugt einer oder mehrere aus Graphit gefertigt sind und mindestens einer aus Stahl.

Der heiße Produktstrom erhitzt zunächst bevorzugt den aus Graphit gefertigten Wärmetauscher und anschließend den bevorzugt aus Stahl gefertigten Wärmetauscher.

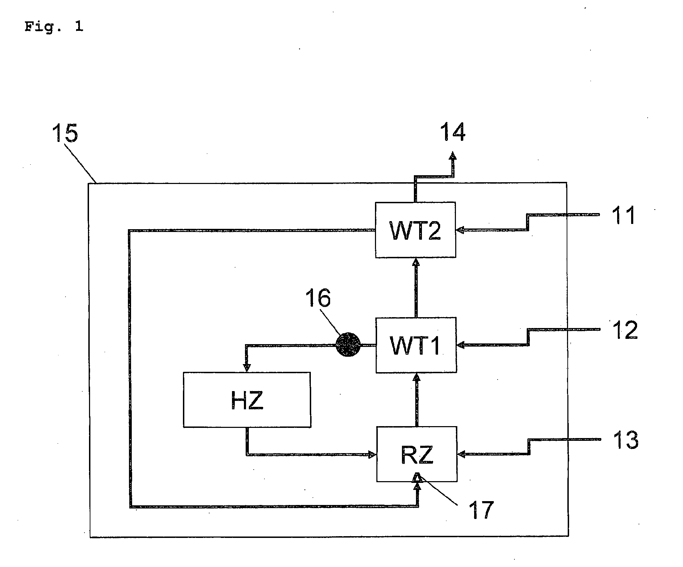

**Fig. 1** zeigt schematisch die erfindungsgemäße Vorrichtung.

Im "heißeren" Wärmetauscher **WT1,** der unmittelbar an die Reaktionszone **13** anschließt, wird der Eduktgasstrom **12** beinhaltend Siliciumtetrachlorid durch das Abgas der Reaktionszone **(RZ)** aufgeheizt.

Wärmetauscher **WT1** besteht aus Graphit, aus Siliciumcarbid oder aus mit Siliciumcarbid beschichtetem Graphit.

Eine optionale, aber besonders bevorzugte Drossel **16,** die zum Beispiel aus einer Verengung einer Rohrleitung, des Einbaues einer geeigneten Armatur oder der geringere Auslegung des Durchmessers der verwendeten Rohrleitungen bestehen kann, sorgt für eine definierte Druckdifferenz zwischen dem Ausgang des

Wärmetauschers WT1 und der Heizzone **HZ.** In der Heizzone wird der Eduktgasstrom **12** entlang Heizelementen geführt, so dass die Temperatur erhöht wird. Die Heizelemente können dabei bevorzugt so aufgebaut sein wie in DE 10 2005 046 703 A1 beschrieben. Die erreichte Temperatur muss dabei höher sein, als die für die Reaktion benötigte. Dieser so aufgeheizte und druckreduzierte Eduktgasstrom **12** wird in die Reaktionszone des Reaktors eingebracht.

Das Eduktgas Wasserstoff ist erfindungsgemäß nicht Bestandteil des Eduktgasstroms **12,** was zur Folge hat, dass auf Seite der Edukte eine Korrosion des Graphits durch Methanisierung ausgeschlossen ist. Zu einem kleinen Anteil kann Wasserstoff dennoch Teil des Eduktstromes **12** sein, wenn sicher gestellt ist, dass die Konzentration kleiner ist als die für die Methanisierung von Graphit gerade noch tolerierbare.

Der Eduktgasstrom **11** wird mittels der "älteren" Wärmetauschereinheit **WT2** aufgeheizt, die bevorzugt aus Stahl oder Edelstahl besteht, an der Wärmetauschereinheit **WT1** anschließt und dem schon etwas kälteren Produktgas ausgesetzt ist. Der Eduktgasstrom **11** wird nach dem Erwärmen in Wärmetauschereinheit **WT2** über eine oder mehrere Düsen **17** in die Reaktionszone gebracht. Die Temperatur des Eduktgasstromes 11 nach Erwärmung in Wärmetauschereinheit **WT2** ist dabei geringer als die für die Reaktion benötigte Temperatur.

Der Eduktgasstrom **11** beinhaltet den Wasserstoff, der für die Reaktion in **RZ** notwendig ist.

Die Verwendung von Stahl oder Edelstahl für die Wärmetauschereinheit **WT2** statt wie herkömmlich Graphit oder beschichtetem Graphit ist vorteilhaft, da Wasserstoff durch die Abdichtung im Stahlwärmetauscher nicht mit Graphit in Berührung kommt und somit keine Korrosion auftreten kann. Dies liegt insbesondere daran, dass keine Diffusion von Wasserstoff durch den gasdichten Stahl stattfindet. Somit ist ausgeschlossen, dass Wasserstoff vor der Reaktionskammer an Graphitteile gelangen könnte. Schließlich werden auch etwaige Ausbeuteverluste durch Diffusion von Wasserstoff verhindert.

Da der Produktstrom in der Wärmetauschereinheit **WT1** bereits ausreichend abgekühlt wurde, ist der Einsatz von Stahl für die Wärmetauschereinheit **WT2** prozesstechnisch unbedenklich.

Aus Gründen der Raum-Zeit-Ausbeute wird der Konvertierungsreaktor im Überdruckbereich betrieben.

Die einzelnen Eduktströme sowie auch der Produktstrom haben daher auch einen Überdruck.

Es ist daher vorteilhaft, dass die Wärmetauscher, insbesondere der (Edel-) Stahlwärmetauscher, in der Druck tragenden Hülle des Reaktors **15** angeordnet werden, da die Wärmetauscher dann nur eine geringe mechanische Festigkeit haben müssen und eine möglicherweise leicht undichte Stelle an den Wärmetauschern keinen Produktaustritt oder gar ein Sicherheitsrisiko bedeuten kann.

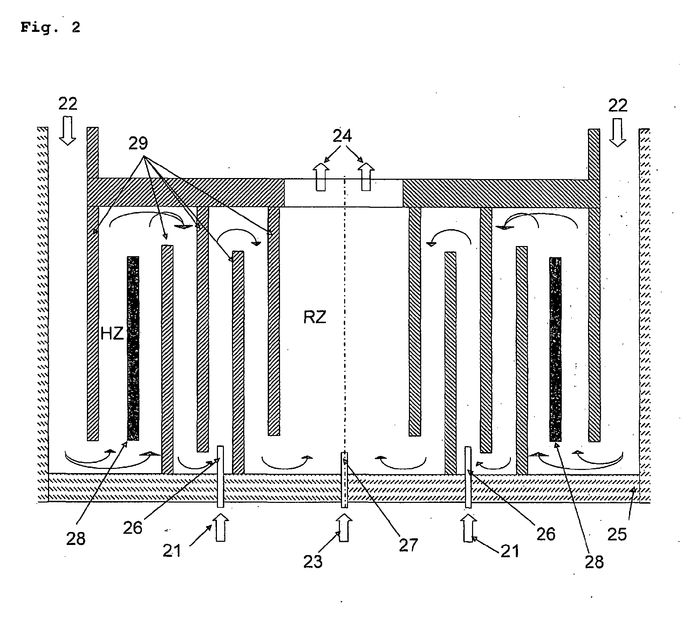

**Fig. 2** zeigt eine detaillierte Prinzipansicht der Heiz- und Reaktionszone.

Der Eduktstrom beinhaltend Siliciumtetrachlorid **22** wird entlang der Innenwand des druckbeständigen Gehäuses **25** nach Passieren eines ersten zylindrischen Umlenkelementes **29** zur Heizzone geführt, in der sich mindestens ein aktiv beheiztes Heizelement **28** befindet. Zum Beispiel kann dieses Heizelement als elektrische Widerstandsheizung ausgelegt werden, aber auch induktive Heizmethoden sind denkbar.

Die Heizelemente können sich einzeln auf dem Radius verteilt befinden, oder es kann auch aus einem mäanderförmigen Heizband bestehen, das einen gesamten Ring bildet, oder aus mehreren mäanderförmigen Heizteilringen bestehen. Eine detaillierte Beschreibung eines mäanderförmigen Heizelementes wird in Patentschrift WO 03/073794 A1 wiedergegeben.

Ein zylindrisches Umlenkelement kann ohne sich darauf zu beschränken zum Beispiel aus einem einfachen Hohlzylinder aus Graphit bestehen. Ein Umlenkelement verursacht eine Änderung der Hauptfließrichtung des Gases um 180°.

Besagter Eduktstrom wird entlang besagter Heizelemente geführt und so auf eine höhere Temperatur erhitzt. Danach passiert der Eduktstrom ein zweites zylindrisches Umlenkelement **29**. Erst nach dem Passieren eines dritten Umlenkelements **29** wird dem Siliciumtetrachlorid enthaltendem Eduktstrom über einen Düsenkreis **26** ein weiterer Eduktgasstrom **21** beinhaltend Wasserstoff hinzugefügt. Hier beginnt die Reaktionszone der Vorrichtung, in der sich die beiden Eduktströme vermischen und zu dem gewünschten Produkt reagieren.

Nach dem Passieren zweier weiterer zylindrischer Umlenkelementen **29** kann zu diesem Gasstrom ein weiterer Eduktgasstrom **23** beinhaltend Dichlorsilan über eine in der Reaktionszone zentral angebrachten Düse **27** hinzugefügt werden. Alle Komponenten der Eduktgasströme können hier miteinander die gewünschten Reaktionen ausführen, bevor sie als Produktstrom **24** die Reaktionszone in Richtung der ersten Wärmetauschereinheit verlassen.

Liste der in **Fig. 2** verwendeten Bezugszeichen

**21** Eduktstrom beinhaltend Wasserstoff
**22** Eduktstrom beinhaltend Siliciumtetrachlorid
**23** Eduktstrom beinhaltend Dichlorsilan
**24** Produktstrom beinhaltend Trichlorsilan und HCl
**25** innere Wand des druckbeständigen Gehäuses, beinhaltend den unteren Boden und die Mantelfläche
**26** Düsenkreis für Eduktstrom Wasserstoff
**27** Düse für Eduktstrom Dichlorsilan
**28** Heizelement
**29** zylindrische Gasumlenkelemente

Die Temperatur in der Reaktionszone **(RZ),** bei der sich das chemische Gleichgewicht der Reaktion einstellt, ergibt sich aus der Mischtemperatur der Summe der Eduktströme Siliciumtetrachlorid und Wasserstoff abzüglich der endothermen Energie, die für die Reaktion von Siliciumtetrachlorid und Wasserstoff zu Trichlorsilan und HCl benötigt wird.

Bei gegebener Mischtemperatur T in der Reaktionszone kann die mit der Heizleistung der Heizelemente einzustellende Temperatur des Eduktgasstroms beinhaltend Siliciumtetrachlorid nach folgender Gleichung in ausreichender Näherung bestimmt werden.

$$\sum m_{Edukt}\, c_{Edukt}\, T_{Edukt} + \Delta H_R = T \sum m_{Produkt}\, c_{Produkt}$$

Dabei gelten folgende Abkürzungen:

| T | Mischtemperatur [K] |
|---|---|
| $m_{Edukt}$ | Molare Masse des Anteils des Eduktstromes (Siliciumtetrachlorid, Wasserstoff) |
| $c_{Edukt}$ | spezifische Wärmekapazität des Anteils des Eduktes (Siliciumtetrachlorid, Wasserstoff) |
| $T_{Edukt}$ | Temperatur des Anteils des Eduktstromes (Siliciumtetrachlorid, Wasserstoff) [K] |
| $m_{Produkt}$ | Molare Masse des Anteils des Produktstromes (Trichlorsilan, HCl, Tetrachlorsilan, Wasserstoff) |

| T | Mischtemperatur [K] |
|---|---|
| $c_{Produkt}$ | spezifische Wärmekapazität des Anteils des Produktstromes (Trichlorsilan, HCl, Tetrachlorsilan, Wasserstoff) |
| $\Delta H_R$ | Reaktionswärme |

Die Reaktionswärme $\Delta H_R$ wird aus der Differenz der Enthalpie der Edukte und Produkte wie folgt bestimmt:

$$\Delta H_R = \left[ H(SiHCl_3) + H(HCl) \right] - \left[ H(SiCl_4) + H(H_2) \right]$$

Die Temperatur in der Reaktionszone sollte in etwa zwischen 850°C und 1.300°C liegen.

Der Vorteil dieser Maßnahme liegt darin, dass auch die Heizelemente nicht mit heißem Wasserstoff in Berührung kommen, so dass eine Korrosion derselben auszuschließen ist.

Im Gegenzug muss dafür die Temperatur von Siliciumtetrachlorid und damit auch der Heizelemente höher sein als beim bisher verwendeten Reaktor.

Die höhere Temperatur der Heizelemente liegt aber noch weit unter deren maximalen Anwendungstemperatur und stellt kein Problem dar, sofern die Heizer nur mit Siliciumtetrachlorid umspült werden. Insbesondere ist die Temperaturbeanspruchung der die Heizelemente umgebenden Bauteile durch die inhärente Kühlung durch den Siliciumtetrachlorid beinhaltenden Eduktstrom klein.

Bekanntlich ist Wasserstoff bei höheren Temperaturen für eine Vielzahl von Korrosionsmechanismen verantwortlich.

Durch das Fernhalten des Wasserstoffs von den Heizelementen ist es prinzipiell auch möglich, andere Materialien wie z.B. Molybdändisilizid, Silicium, Siliciumcarbid, Siliciumnitrid oder eine Kombination dieser Materialien für die Heizelemente zu verwenden.

Ebenso möglich und bevorzugt ist die Verwendung von Heizelementen aus CFC (CFC = Carbon Fiber reinforced carbon).

Die Zuführung von Wasserstoff in die Reaktionszone erfolgt über eine dafür geeignete Düse/Düsen mit dem Zweck, Wasserstoff und Siliciumtetrachlorid im Reaktionsraum schnell homogen zu vermischen.

Eine besonders bevorzugte Ausführungsform des Verfahrens liegt darin, zusätzlich zu den beheizten Eduktgasströmen 11 und 12 einen dritten Eduktgasstrom 13 direkt in die Reaktionszone einzubringen, ohne diesen vorher vorzuheizen.

Dieser dritte Eduktgasstrom beinhaltet besonders bevorzugt Dichlorsilan.

Der Vorteil dieser Methode liegt darin, dass der dritte Eduktgasstrom nicht mit heißen Bauteilen, wie Wärmetauscher und/oder Heizelementen in Berührung kommt. Besonders bei Verwendung von Dichlorsilan führt dies zu Abscheidung von Silicium an den besagten Bauteilen.

Die Zuführung des dritten Eduktgasstromes in die Reaktionszone erfolgt ebenfalls über eine dafür geeignete Düse oder Düsen in spezieller Anordnung mit dem Zweck der schnellen homogenen Durchmischung aller Eduktgasströme.

Da in die Reaktionszone zusätzlich ein Eduktgasstrom eingebracht wird, dessen Temperatur kleiner ist als die in der Reaktionszone gewünschte, muss die Temperatur von Siliciumtetrachlorid höher gewählt werden, um die gewünschte Gastemperatur in der Reaktionszone zu erhalten. Ist Menge des dritten Eduktgasstroms wesentlich kleiner als die Summe der beiden anderen Eduktgasströme, kann auch auf eine erneute Korrektur des Eduktgasstroms enthaltend Siliciumtetrachlorid verzichtet werden, da erwartet werden kann, dass die Temperatur in der Reaktionszone nicht wesentlich erniedrigt wird.

Dichlorsilan könnte sowohl dem Wasserstoff als auch dem Siliciumtetrachlorid bereits vor Einbringen in den Reaktor zugespeist werden.

Da aber beim Erwärmen des Gemisches Dichlorsilan / Siliciumtetrachlorid bzw. Dichlorsilan / Wasserstoff in den Wärmetauschern es zu Reaktionen wie z.B. zu einer Siliciumabscheidung kommen kann, ist die direkte Einspeisung des gasförmigen Dichlorsilan in den Reaktionsraum vorteilhaft. Neben dem Vorteil, das als Nebenprodukt anfallende Dichlorsilan durch die Einspeisung in den Konvertierungsreaktor wieder dem Stoffkreislauf zuzuführen, wurde gefunden, dass durch die Einspeisung von Dichlorsilan in den Konvertierungsreaktor die Selektivität der Konvertierungsreaktion wesentlich erhöht wird.

Durch die bisher beschriebenen Verfahren und Vorrichtungen ist es also möglich, die Korrosion auf der Eduktseite des Graphitwärmetauschers und im Bereich der Heizelemente zu vermeiden.

Allerdings ist durch die Einspeisung von Wasserstoff im Reaktionsraum die Methanisierung auf der Produktseite der Graphitwärmetauscher denkbar.

Wasserstoff wird nämlich im Reaktionsraum in der Regel nicht komplett umgesetzt und wird meist auch im Überschuss der Reaktion zugeführt, so dass Wasserstoff im Produktstrom enthalten ist.

Heißer Wasserstoff kann nach dem Reaktionsraum in die Graphitwände der Wärmetauscher eindiffundieren.

Dort kann es zu Korrosion kommen, die neben den strukturellen Problemen der Wärmetauscher hauptsächlich die Bildung von Methan verursacht, das aus dem Abgasstrom später wieder aufwändig entfernt werden muss. Ferner kann die Korrosion strukturelle Schäden verursachen, die ein frühzeitiges Austauschen der Wärmetauscher notwendig werden lassen.

Es hat sich gezeigt, dass die im Stand der Technik vorgeschlagene Beschichtung der entsprechenden Flächen mit Material, das nicht oder nur teilweise mit heißem Wasserstoff reagiert, wie zum Beispiel Siliciumcarbid, zu aufwändig und unwirtschaftlich ist.

Nachverdichtete Graphitsorten haben sich als ungeeignet erwiesen, da auch sie von Wasserstoff angegriffen werden. Imprägnierte Graphitsorten sind zwar gasdicht, können aber nur bis zu Temperaturen von bis zu 200°C eingesetzt werden und sind somit ebenfalls ungeeignet.

Eine bevorzugte Ausführungsform des Verfahrens sieht vor, einen Diffusionsvolumenstrom aus Siliciumtetrachlorid von der Eduktseite auf die Produktseite einzustellen.

Dadurch wird der poröse Graphit vollständig von Siliciumtetrachlorid durchsetzt, was verhindert, dass Wasserstoff auf der Produktseite in den Graphit eindringen und diesen durch Methanisierung angreifen kann.

Der Diffusionsvolumenstrom muss so eingestellt werden, dass er ausreicht, den Wasserstoff vom Graphit fernzuhalten.

Er darf aber auch nicht zu groß sein, weil sonst zu viel Siliciumtetrachlorid von der Eduktseite auf die Produktseite strömt und so die Selektivität der Konvertierungsreaktion reduziert wird.

Der Diffusionsvolumenstrom kann auf Basis einer bestimmten Wärmetauschergeometrie durch die Druckdifferenz zwischen der Eduktseite und der Produktseite und durch die Wahl einer Graphitsorte mit einer gewissen Porosität eingestellt werden.

Bevorzugt wird der Diffusionsvolumenstrom so groß gewählt, dass sich auf der Produktseite eine minimale Grenzschicht aus Siliciumtetrachlorid aufbaut, die den Wasserstoff im Produktstrom sogar von der Graphitoberfläche fern hält.

Mit Siliciumcarbid beschichteter Graphit kann von Nachteil sein, da durch die Siliciumcarbidschicht der Graphit derart abgedichtet wird, dass kein schützender Siliciumtetrachlorid-Diffusionsstrom den Graphit durchdringen kann. Daher sind in dieser Ausführungsform Siliciumcarbidbeschichtungen nicht bevorzugt.

**Beispiele**

**Vergleichbeispiel 1 (Stand der Technik)**

Als Vergleichsbeispiel wurde ein herkömmlicher Reaktor ohne zusätzlichen Stahlwärmetauscher entsprechend der Schrift DE 30 243 20 A1 verwendet.

Es wurde ein Gasgemisch im Eduktstrom bestehend aus 33 mol% Siliciumtetrachlorid und 67 mol % Wasserstoff verwendet. Die Eintrittstemperatur des Eduktgasstroms betrug etwa 175°C.

Der Druck wurde zu 6 bar und die Temperatur des Gases im Reaktorraum zu 1.000°C eingestellt.

Das Produktgas wurde nach der Reaktion in einem Gaschromatographen untersucht, wobei die Anteile von Trichlorsilan und Siliciumtetrachlorid bestimmt wurden. Die Temperatur des austretenden Produktgasstroms betrug etwa 350°C.

Die relative Selektivität ist durch den molaren Anteil von Trichlorsilan zu Siliciumtetrachlorid gegeben.

Der Einfachheit halber wird die im Vergleichsbeispiel erreichte relative Selektivität mit 100% definiert.

**Vergleichsbeispiel 2 (Stand der Technik)**

In **Vergleichsbeispiel 2** wird die bekannte Vorrichtung aus dem vorigen **Vergleichsbeispiel 1** benutzt und zusätzlich in den Eduktstrom Dichlorsilan in einem molaren Verhältnis von 3% Dichlorsilan zu 97% Siliciumtetrachlorid gemischt.

Die relative Selektivität beträgt **115%,** also 15% höher als im Vergleichsbeispiel. Dies zeigt, dass die Zugabe von

Dichlorsilan einen positiven Effekt bzgl. der erreichten Selektivität ergibt. Bei einer Erhöhung des molaren Verhältnisses von Dichlorsilan auf 20% zu 80%

Siliciumtetrachlorid wurde die relative Selektivität nur geringfügig erhöht.

**Beispiel 3a**

In diesem Beispiel wurde ein Reaktor gemäß **Fig. 1** verwendet.

Für die Wärmetauschereinheit **WT1** wurde isostatisch gepresster Graphit eingesetzt.

Der Prozess wurde analog **Vergleichsbeispiel 1** gefahren, wobei erfindungsgemäß Wasserstoff und Siliciumtetrachlorid getrennt erwärmt wurden.

Der Wasserstoff wurde im zweiten Wärmetauscher auf eine Temperatur von 500 °C gebracht und direkt in die Reaktionszone gebracht und Siliciumtetrachlorid wurde im ersten Wärmetauscher auf etwa 920 °C vorerwärmt und anschließend mit Hilfe der elektrischen Heizelemente auf 1350 °C erwärmt, bevor die zwei Gase im Reaktionszone gemischt wurden. Die mittlere Temperatur in der Reaktionszone betrug dabei etwa 1000°C.

Die relative Selektivität des Reaktors erhöhte sich auf 145%.

Außerdem konnte man feststellen, dass die Heizer nach Abstellung des Reaktors immer noch in tadellosem Zustand waren. Es konnte keinerlei Auswirkung der Methanisierung an ihnen festgestellt werden.

**Beispiel 3b**

**Beispiel 3b** wurde analog **Beispiel 3a** durchgeführt, jedoch wurde der Differenzdruck zwischen der Edukt- und der Produktseite der Wärmetauschereinheit **WT1** im Bereich zwischen 10 mbar und 1000 mbar durch Einbau verschiedener Drosseln variiert.

Es hat sich gezeigt, dass die besten Ergebnisse bei einem Differenzdruck zwischen 50 mbar und 200 mbar erreicht wurden bei gleichzeitiger minimalen Graphitwandstärke zwischen der Edukt und der Produktseite der Wärmetauschereinheit WT1 im Bereich von 4 - 30 mm. Die besten Werte wurden jedoch bei einer minimalen Wandstärke zwischen 10 mm und 20 mm erzielt.

Die Erfinder haben erkannt, dass offenbar die Verwendung von isostatisch gepresstem Graphit für die Wärmetauschereinheit **WT1** in Kombination mit einem definierten Differenzdruck optimal ist.

Offenbar lässt die geringe Porosität des Materials es zu, einen Diffusionsvolumenstrom zum Schutz des Graphits aufzubauen, aber dennoch den Volumenstrom klein genug einzustellen, um so die Selektivität des Konvertierungsreaktors nicht zu reduzieren.

Es wurde eine deutlich reduzierte Methanisierung der Wärmetauschereinheit **WT1** festgestellt. Es konnte festgestellt werden, dass die innere Oberfläche der Wärmetauscherröhren auf der Produktseite wesentlich glatter als in **Beispiel 3a** war.

**Beispiel 4**

Zusätzlich zu **Beispiel 3b** wurde in einer weiteren zentralen Düse, die am Boden der Reaktionszone angebracht wurde, Dichlorsilan als dritter Eduktstrom **13** in einem molaren Verhältnis von 3% Dichlorsilan zu 97% Siliciumtetrachlorid eingedüst. Eine entsprechende Vorrichtung mit zusätzlicher zentraler Düse ist in **Fig. 1** schematisch dargestellt.

Der eingedüste Dichlorsilanstrom hatte eine Temperatur zwischen 250°C und 350 °C.

Eine Temperaturkorrektur des vorgeheizten Siliciumtetrachloridstroms in der Heizzone war nicht nötig.

Eine zentrale Düse wird zum Einströmen von Dichlorsilan verwendet.

Die zentrale Düse zur Einbringung von Dichlorsilan hatte einen Durchmesser von 15 mm.

Die relative Selektivität erhöhte sich weiter auf **165%,** ohne dass dabei negative Auswirkungen in Bezug auf strukturelle Probleme ersichtlich wurden.

**Patentansprüche**

1. Verfahren zur Hydrierung von Chlorsilanen in einem Reaktor, wobei mindestens zwei Eduktgasströme getrennt voneinander in eine Reaktionszone eingebracht werden, wobei der erste Eduktgasstrom beinhaltend Siliciumtetrachlorid durch eine erste Wärmetauschereinheit geführt wird, in der er aufgeheizt wird, und dann über eine Heizeinheit geführt wird und dabei auf eine erste Temperatur aufgeheizt wird bevor der erste Eduktgasstrom die Reaktionszone erreicht, und wobei der zweite Eduktgasstrom beinhaltend Wasserstoff durch eine zweite Wärmetauschereinheit auf eine zweite Temperatur aufgeheizt wird, wobei die erste Temperatur größer ist als die zweite Temperatur, und dann in die Reaktionszone eingebracht wird, so dass die mittlere Gastemperatur in der Reaktionszone zwischen 850°C und 1300°C liegt und zu Produktgasen, umfassend Trichlorsilan und Chlorwasserstoff, reagieren, wobei die bei der Reaktion erzeugten Produktgase durch die besagten wenigstens zwei Wärmetauschereinheiten geführt werden und nach dem Gegenstromprinzip die Eduktgasströme der Reaktion vorheizen, wobei zunächst die erste Wärmetauschereinheit und danach die zweite Wärmetauschereinheit durchströmt wird.

**2.** Verfahren nach Anspruch 1, **dadurch gekennzeichnet dass** in den Reaktionsraum zusätzlich Dichlorsilan mit einem auf Siliciumtetrachlorid bezogenen molaren Verhältnis von 0,5% bis 20% eingebracht wird.

**3.** Verfahren nach den Ansprüchen 1 oder 2, wobei die erste Wärmetauschereinheit aus Graphit oder Siliciumcarbid oder aus mit Siliciumcarbid beschichtetem Graphit oder aus Siliciumnitrid oder aus CFC oder aus mit Siliciumcarbid beschichtetem CFC besteht und die zweite Wärmetauschereinheit aus Stahl oder aus Edelstahl besteht.

**4.** Verfahren nach einem der Ansprüche 1 bis 3 **dadurch gekennzeichnet, dass** der Druck des Eduktgasstromes in der ersten Wärmetauschereinheit um 10 bis 1000 mbar höher ist als der Druck des Produktgasstromes beim Durchströmen der ersten Wärmetauschereinheit.

**5.** Reaktor zur Hydrierung von Tetrachlorsilanen, umfassend zwei Gaseinlassvorrichtungen, durch die Eduktgase getrennt voneinander in den Reaktor eingebracht werden können, und wenigstens eine Gasaüslassvorrichtung, durch die ein Produktgasstrom geführt werden kann, wenigstens zwei Wärmetauschereinheiten, die miteinander verbunden sind und die geeignet sind, Eduktgase durch die durch die Wärmetauschereinheiten geführten Produktgase getrennt voneinander aufzuheizen sowie eine Heizzone, die zwischen einer ersten Wärmetauschereinheit und einer Reaktionszone angeordnet ist und in der sich wenigstens ein Heizelement befindet.

**6.** Reaktor nach Anspruch 5, **gekennzeichnet durch** mindestens eine zusätzliche Gaseinlassvorrichtung, die im Zentrum eines Bodens des Reaktors angebracht ist.

**7.** Reaktor nach Ansprüchen 5 oder 6, **dadurch gekennzeichnet, dass** zwischen der ersten Wärmetauschereinheit und der Heizzone eine Drossel eingebaut ist, so dass sich bei Betrieb eine Druckdifferenz zwischen Produktgasstrom und Eduktgasstrom an besagter Wärmetauschereinheit ausbilden kann.

**8.** Reaktor nach einem der Ansprüche 5 bis 7, **dadurch gekennzeichnet, dass** die zweite Wärmetauschereinheit aus Stahl oder Edelstahl gefertigt ist.

**9.** Reaktornach einem der Ansprüche 5 bis 8, umfassend einen Behälter, der eine Mantelfläche, einen unteren sowie einen dem unteren Boden gegenüberliegenden oberen Bóden sowie mindestens eine Einlassvorrichtung für einen Eduktgasstrom und mindestens eine Auslassvorrichtung für einen Produktgasstrom enthält, mindestens ein kreisförmiges Heizelement oder mehrere kreisförmig angeordnete Heizelemente, wenigstens vier zylindrische Umlenkeinrichtungen für Gas, die konzentrisch im Behälter angeordnet sind, geeignet, am oberen oder am unteren Boden des Reaktors strömendes Gas umzulenken, wobei der Radius einer ersten zylindrischen Umlenkeinrichtung größer und der Radius der wenigstens drei weiteren Umlenkeinrichtungen kleiner ist als der Radius des kreisförmigen Heizelementes oder kleiner als der Radius des Kreises, auf dem die Heizelemente angeordnet sind, mindestens eine weitere Einlassvorrichtung für ein Eduktgas, die kreisförmig am unteren Boden des Behälters angebrachte Düsen umfasst, wobei der Radius des Kreises, auf dem die Düsen angeordnet sind, größer ist als der Radius einer der Umlenkeinrichtungen und kleiner als der Radius einer jener Umlenkeinrichtung benachbarten Umlenkeinrichtung.

**Claims**

**1.** Process for hydrogenating chlorosilanes in a reactor, **characterized in that** at least two reactant gas streams are introduced separately from one another into a reaction zone, **characterized in that** the first reactant gas stream comprising silicon tetrachloride is conducted through a first heat exchanger unit in which it is heated and is then conducted through a heating unit which heats it to a first temperature before the first reactant gas stream reaches the reaction zone, and **characterized in that** the second reactant gas stream comprising hydrogen is heated by a second heat exchanger unit to a second temperature, **characterized in that** the first temperature is greater than the second temperature, and then introduced into the reaction zone, such that the mean gas temperature in the reaction zone is between 850°C and 1300°C, and said reactant gas streams react to give product gases comprising trichlorosilane and hydrogen chloride, **characterized in that** the product gases obtained in the reaction are conducted through said at least two heat exchanger units and preheat the reactant gas streams of the reaction by the countercurrent principle, **characterized in that** the flow passes first through the first heat exchanger unit and then through the second heat exchanger unit.

**2.** Process according to Claim 1, **characterized in that** dichlorosilane is additionally introduced into the reaction space with a molar ratio based on silicon tetrachloride of 0.5% to 20%.

3. Process according to Claim 1 or 2, **characterized in that** the first heat exchanger unit consists of graphite or silicon carbide or of silicon carbide-coated graphite or of silicon nitride or of CFC or of silicon carbide-coated CFC, and the second heat exchanger unit consists of steel or stainless steel.

4. Process according to any of Claims 1 to 3, **characterized in that** the pressure of the reactant gas stream in the first heat exchanger unit is 10 to 1000 mbar higher than the pressure of the product gas stream as it flows through the first heat exchanger unit.

5. Reactor for hydrogenating tetrachlorosilanes, comprising two gas inlet devices through which reactant gases can be introduced separately from one another into the reactor, and at least one gas outlet device through which a product gas stream can be conducted, at least two heat exchanger units which are connected to one another and which are suitable for heating reactant gases separately from one another by means of the product gases conducted through the heat exchanger units, and a heating zone which is arranged between a first heat exchanger unit and a reaction zone and in which there is at least one heating element.

6. Reactor according to Claim 5, **characterized by** at least one additional gas inlet device mounted in the center of one end of the reactor.

7. Reactor according to Claim 5 or 6, **characterized in that** a throttle is installed between the first heat exchanger unit and the heating zone, such that a pressure differential can form between product gas stream and reactant gas stream in said heat exchanger unit in the course of operation.

8. Reactor according to any of Claims 5 to 7, **characterized in that** the second heat exchanger unit is manufactured from steel or stainless steel.

9. Reactor according to any of Claims 5 to 8, comprising a vessel which comprises a casing, a lower end and an upper end opposite the lower end, and at least one inlet device for a reactant gas stream and at least one outlet device for a product gas stream, at least one circular heating element or several heating elements arranged in a circle, at least four cylindrical deflecting devices for gas which are arranged concentrically in the vessel, suitable for deflecting gas flowing at the upper or lower end of the reactor, the radius of a first cylindrical deflecting device being greater and the radius of the at least three further deflecting devices being less than the radius of the circular heating element or less than the radius of the circle on which the heating elements are arranged, at least one further inlet device for a reactant gas which comprises nozzles mounted in a circle on the lower end of the vessel, the radius of the circle on which the nozzles are arranged being greater than the radius of one of the deflecting devices and less than the radius of any deflecting device adjacent to that deflecting device.

## Revendications

1. Procédé d'hydrogénation de chlorosilanes dans un réacteur, au moins deux flux gazeux de départ étant introduits séparément l'un de l'autre dans une zone de réaction, le premier flux gazeux de départ, contenant du tétrachlorure de silicium, étant guidé au travers d'une première unité échangeuse de chaleur, dans laquelle il est chauffé, puis guidé sur une unité de chauffage et chauffé à une première température avant que le premier flux gazeux de départ n'atteigne la zone de réaction, et le deuxième flux gazeux de départ, contenant de l'hydrogène, étant chauffé par une deuxième unité échangeuse de chaleur à une deuxième température, la première température étant supérieure à la deuxième température, puis introduit dans la zone de réaction de telle sorte que la température moyenne du gaz dans la zone de réaction se situe entre 850°C et 1300°C ; et réagissant en gaz produits, comprenant du trichlorosilane et du chlorure d'hydrogène ; les gaz produits obtenus lors de la réaction étant guidés au travers desdites au moins deux unités échangeuses de chaleur et réchauffant selon le principe à contre-courant les flux gazeux de départ de la réaction, la première unité échangeuse de chaleur étant d'abord traversée puis la deuxième unité échangeuse de chaleur étant traversée.

2. Procédé selon la revendication 1, **caractérisé en ce qu'**on introduit en outre dans l'espace de réaction du dichlorosilane dans un rapport molaire par rapport au tétrachlorure de silicium de 0,5% à 20%.

3. Procédé selon les revendications 1 ou 2, la première unité échangeuse de chaleur étant constituée de graphite ou de carbure de silicium ou de graphite revêtu de carbure de silicium ou de nitrure de silicium ou de CFC ou de CFC revêtu de carbure de silicium et la deuxième unité échangeuse de chaleur étant constituée d'acier ou d'acier inoxydable.

4. Procédé selon l'une quelconque des revendications 1 à 3, **caractérisé en ce que** la pression du flux gazeux de départ dans la première unité échangeuse de chaleur est supérieure de 10 à 1000 mbars à la pression du flux gazeux produit lors du passage au travers de la première unité échangeuse de chaleur.

5. Réacteur pour l'hydrogénation de tétrachlorosilanes, comprenant deux dispositifs d'introduction de gaz, au travers desquels les gaz de départ peuvent être introduits séparément l'un de l'autre dans le réacteur, et au moins un dispositif d'évacuation de gaz, au travers duquel un flux gazeux produit peut être guidé, au moins deux unités échangeuses de chaleur qui sont reliées l'une à l'autre et qui conviennent pour chauffer les gaz de départ séparément l'un de l'autre par les gaz produits guidés au travers des unités échangeuses de chaleur, ainsi qu'une zone de chauffage qui est disposée entre une première unité échangeuse de chaleur et une zone de réaction et dans laquelle se trouve au moins un élément chauffant.

6. Réacteur selon la revendication 5, **caractérisé par** au moins un dispositif supplémentaire d'introduction de gaz qui est agencé au centre d'un fond du réacteur.

7. Réacteur selon les revendications 5 ou 6, **caractérisé en ce qu'**un dispositif d'étranglement est monté entre la première unité échangeuse de chaleur et la zone de chauffage de telle sorte qu'il peut se former, lors du fonctionnement, une différence de pression entre le flux gazeux produit et le flux gazeux de départ au niveau de ladite unité échangeuse de chaleur.

8. Réacteur selon l'une quelconque des revendications 5 à 7, **caractérisé en ce que** la deuxième unité échangeuse de chaleur est fabriquée en acier ou en acier inoxydable.

9. Réacteur selon l'une quelconque des revendications 5 à 8, comprenant un récipient qui contient une surface d'enveloppe, un fond inférieur ainsi qu'un fond supérieur se situant à l'opposé du fond inférieur ainsi qu'au moins un dispositif d'introduction pour un flux gazeux de départ et au moins un dispositif d'évacuation pour un flux gazeux produit, au moins un élément chauffant circulaire ou plusieurs éléments chauffants disposés en cercle, au moins quatre dispositifs de déviation cylindriques pour le gaz, qui sont disposés concentriquement dans le récipient, appropriés pour dévier le gaz s'écoulant au niveau du fond supérieur ou du fond inférieur du réacteur, le rayon d'un premier dispositif de déviation cylindrique étant supérieur et le rayon desdits au moins trois autres dispositifs de déviation étant inférieur au rayon de l'élément chauffant circulaire ou inférieur au rayon du cercle sur lequel les éléments chauffants sont disposés, au moins un autre dispositif d'introduction pour un gaz de départ, qui comprend des buses disposées en forme de cercle au niveau du fond inférieur du récipient, le rayon du cercle sur lequel les buses sont disposées étant supérieur au rayon d'un des dispositifs de déviation et inférieur au rayon d'un dispositif de déviation adjacent à ce dispositif de déviation.

EP 2 665 682 B1

Fig. 1

13

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3024320 C2
- DE 19502550 A1
- EP 2008969 A1
- EP 2000434 A2
- DE 102006050329 B3
- DE 102005046703 A1
- DE 102005005044 A1
- DE 112008002299 T5
- WO 03073794 A1
- DE 3024320 A1